# FASCICULE DE BREVET EUROPEEN

(11) **EP 0 833 708 B1**
(45) Date de publication et mention de la délivrance du brevet: **23.05.2001**
(21) Numéro de dépôt: 96922968.1
(22) Date de dépôt: 20.06.1996
(51) Int. Cl.: B21D 51/22, A47J 27/00

(54) **PROCEDE DE FABRICATION D'UN RECIPIENT DE CUISSON A DOUBLE PAROI PAR FRAPPE A CHAUD ET RECIPIENT FABRIQUE SELON CE PROCEDE**
VERFAHREN ZUM HERSTELLEN EINES DOPFELWANDIGEN KOCHGEFÄSSES DURCH WARMSCHLAGEN UND NACH DEM VERFAHREN HERGESTELLTER GEFASS
METHOD FOR MAKING A DOUBLE-WALLED COOKING VESSEL BY HOT STAMPING, AND RESULTING VESSEL

(30) Priorité: 21.06.1995 FR 9507679
(43) Date de publication de la demande: 08.04.1998
(73) Titulaire: SEB S.A., 69130 Ecully (FR)
(72) Inventeur: LIGNY, Jean-Jacques, F-21370 Velars-sur-Ouche (FR); BOURDIN, Alain, F-21610 Saint-Seine-sur-Vingeanne (FR)
(86) Numéro de dépôt international: FR9600965
(87) Numéro de publication internationale: WO9700742

(56) Documents cités:
- EP-A- 0 172 702
- EP-A- 0 222 699
- WO-A-87/04911
- WO-A-88/03379

## Description

### DOMAINE TECHNIQUE

La présente invention concerne le domaine technique des récipients de cuisson à double paroi en général et elle s'applique plus particulièrement aux autocuiseurs comportant une telle configuration à double paroi.

Elle concerne plus précisément un procédé d'assemblage d'un récipient de cuisson à double paroi selon le préambule de la revendication 1.

Elle concerne également le récipient de cuisson à double paroi selon le préambule de la revendication 8.

### TECHNIQUE ANTERIEURE

La plupart des récipients de cuisson de type connu comportent une seule paroi. Une telle configuration présente certes certains avantages économiques, mais ceci au détriment de la facilité et du confort d'utilisation. En outre, la température externe de la paroi unique s'apparente à celle régnant dans l'enceinte de cuisson, ce qui nécessite de nombreuses précautions pour éviter tout risque de brûlures lors des manipulations. On constate également d'importantes pertes d'énergie thermique par la paroi unique entraînant une importante consommation énergétique.

Le document WO 87/04911 décrit un récipient comportant une cuve, un élément intermédiaire de fond et une plaque de fond assemblés par frappe à chaud.

Par ailleurs, on connaît certains types de récipients de cuisson à double paroi. Le document WO 88/03379, sur lequel les préambules des revendications 1 et 8 sont basés, décrit un récipient de cuisson, comportant une cuve, un élément intermédiaire de fond et une contre-cuve, assemblé par brasage ou par soudage.

On connaît ainsi certains récipients comportant une portion de paroi externe rapportée à la paroi principale, le plus souvent par soudure. L'un des inconvénients associé à ce type de récipients concerne le procédé de fabrication faisant appel à des techniques classiques de soudage, peu économiques.

D'autre part, le document FR-A-2 437 184 décrit un récipient à double paroi fabriqué par emboutissage d'une plaque comportant deux parois séparées par une âme. Ce mode de fabrication implique d'importantes difficultés au niveau du décollement et de la mise en forme finale des parois. En outre, il est nécessaire qu'un matériau intermédiaire occupe toute la surface entre les parois.

### EXPOSE DE L'INVENTION

L'invention a précisément pour objet de remédier aux inconvénients et/ou aux limitations précités, et a ainsi pour objet un procédé d'assemblage d'un récipient de cuisson à double paroi tel que défini dans la revendication 1.

Un autre but de l'invention est de proposer un récipient de cuisson à double paroi comportant une cuve, une contre cuve formant un espace inter parois avec la cuve, et un élément intermédiaire de fond assemblé avec la face extérieure du fond de la cuve et avec la face intérieure du fond de la contre cuve, caractérisé en ce que l'élément intermédiaire de fond est réalisé dans un métal déformé à chaud par fluage, un tel récipient pouvant être obtenu en utilisant le procédé précité.

Le procédé selon l'invention permet d'obtenir un coût de revient particulièrement avantageux, avec une grande souplesse dans les modes de réalisation.

Le récipient obtenu présente d'excellente qualité thermique, d'où une diminution de la consommation d'énergie. Il offre une grande facilité d'utilisation.

D'autre part, la conception du récipient et le procédé de réalisation font qu'il est relativement facile de modifier le profil de la paroi externe, sans affecter tout le concept du produit. On peut ainsi produire différentes séries plus ou moins importantes avec des profils différenciés, en changeant un seul élément du produit.

### DESCRIPTION SOMMAIRE DES DESSINS

D'autres caractéristiques préférées et avantages de l'invention apparaîtront plus clairement à la lumière de la description et des dessins qui suivent, illustrant, à titre d'exemples, des modes de mise en oeuvre de l'invention. Ainsi, référence est faite aux figures 1 à 3, où:
la figure 1 représente une vue axiale en coupe d'un récipient selon un mode de réalisation de la présente invention;
la figure 2a représente une vue similaire d'un récipient disposé entre les matrices d'une presse, avant la frappe à chaud ;
la figure 2b représente une vue similaire d'un récipient disposé entre les matrices d'une presse après la frappe à chaud ;
la figure 3 représente une vue similaire d'un récipient dont la paroi latérale externe est pourvue d'un motif.

### MEILLEURE MANIERE DE REALISER L'INVENTION

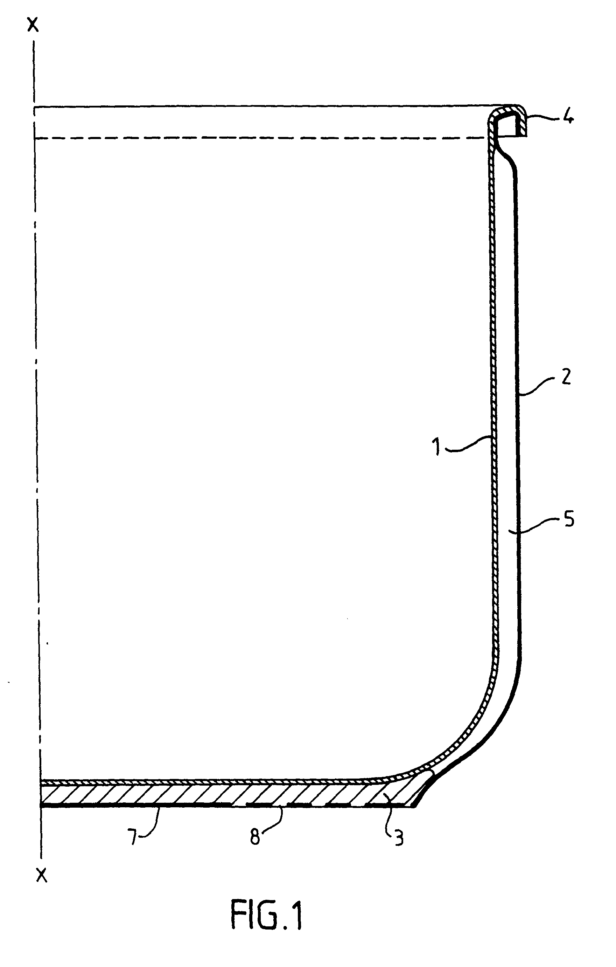

Le récipient de cuisson selon la présente invention est constitué d'une cuve 1 avantageusement de profil cylindrique circulaire. La figure 1 illustre un exemple d'un récipient conformé autour d'un axe x-x. La cuve 1 est de préférence réalisée en alliage d'acier inoxydable formé de manière connue, par exemple par emboutissage. Selon diverses variantes, il est également possible de fabriquer la cuve 1 en matériaux colaminés (aluminium/inox à deux ou plusieurs épaisseurs) ou en aluminium.

La contre-cuve 2 est également fabriquée de façon avantageuse en alliage d'acier inoxydable, mais selon diverses variantes, elle peut être réalisée à partir d'un autre type de matériau, comme par exemple en cuivre ou en colaminé. Le profil ainsi que les dimensions de la contre-cuve sont prévus de façon à ce qu'elle puisse loger à la fois au moins une pièce intermédiaire de fond 3 et la cuve 1. Afin de tirer pleinement profit des caractéristiques de l'invention, les cuves 1 et 2 sont conformées de façon à délimiter un espace inter-parois 5 s'étendant de préférence sur la quasi-totalité de la hauteur des parois et sur toute la circonférence du récipient. Sur l'exemple illustré à la figure 1, l'espace 5 est occupé par de l'air. Afin d'améliorer les caractéristiques d'isolation thermique entre les deux parois, il est possible de disposer dans cet espace une ou plusieurs couches de matériaux isolant. Par ailleurs, les rebords des parois des deux cuves sont avantageusement fixés ensemble et avantageusement repliés vers l'extérieur de la cuve de façon à former une bordure 4, soit par soudage, par sertissage ou roulage, de façon à procurer un maintien rigide et durable. La fixation des bordures est avantageusement étanche, afin d'éviter toute infiltration de liquide ou de corps étranger dans l'espace 5.

La base 7 de la contre-cuve, servant de fond du récipient, est de préférence plate et peut comporter des ouvertures 8, réparties sur ladite surface de la base 7, par lesquelles viendra s'introduire, lors de la frappe à chaud, le métal flué de l'élément intermédiaire 3. Cette interpénétration entre les deux matériaux augmente la cohésion mécanique entre la contre-cuve 2 et l'élément 3 tout en favorisant la conductibilité thermique. L'ensemble résultant comporte donc d'excellentes caractéristiques de rigidité et de durabilité.

L'élément intermédiaire 3 est avantageusement constitué d'un disque métallique en alliage de préférence facilement malléable et conducteur, tel que l'aluminium ou le cuivre. L'effet de la frappe à chaud sur ce disque est décrit ci-après.

Le procédé d'assemblage selon la présente invention consiste à disposer l'élément intermédiaire 3 dans la contre-cuve 2 de préférence en le fixant temporairement contre le fond de celle-ci par un moyen de type connu, comme par exemple par soudage, collage, etc. Cette préfixation est souhaitable, afin de faciliter la manipulation et le centrage de l'ensemble pour procéder aisément aux étapes suivantes. La cuve 1 est ensuite introduite dans la contre-cuve, pour être à son tour disposée contre l'élément 3. Pour les mêmes raisons que précédemment, il est également avantageux de préfixer la cuve contre l'élément 3, avec un moyen similaire. Il va de soit que les étapes préparatoires décrites ci-dessus peuvent être modifiées sans que le résultat soit affecté. Ainsi, il est tout à fait envisageable de préfixer l'élément 3 sous le fond de la cuve 1 pour ensuite fixer ce premier sous-ensemble au fond de la contre-cuve 2.

Le récipient préassemblé est chauffé à la température à laquelle la frappe à chaud sera effectuée. Cette température varie selon le type d'alliages utilisés ainsi qu'en fonction d'autres paramètres comme par exemple l'épaisseur des parois métalliques. De façon générale, elle se situe de préférence entre 400°C et 500°C. De manière avantageuse, la frappe à chaud est réalisée à une température favorisant le fluage du matériau constituant l'élément intermédiaire 3. Il est bien évidemment possible de chauffer les éléments constituants séparément et de réaliser successivement le préassemblage et la frappe par la suite.

Le récipient préassemblé est ensuite disposé sur un poinçon 9, dont le profil correspond à la forme finale souhaitée pour la portion interne du récipient. Une matrice 10, avantageusement de forme adaptée au profil externe final souhaité du récipient, est disposée au-dessus de l'ensemble. L'ensemble matrice et poinçon fait partie d'un dispositif adapté pour réaliser la frappe à chaud du récipient. Il s'agit de préférence d'une presse à fort tonnage de type connu. La frappe à chaud est réalisée par abaissement de la matrice 10 contre la cuve suivant la flèche A, de façon à exercer une très forte pression dans un très court intervalle de temps, sous la forme d'un impact. La pression exercée permet la mise en forme finale du récipient. Plus particulièrement, la frappe occasionne une déformation permanente de la portion correspondant sensiblement au fond du récipient.

Grâce à la frappe à chaud, on obtient une liaison mécanique intime entre les différents éléments 1, 2 et 3 du récipient.

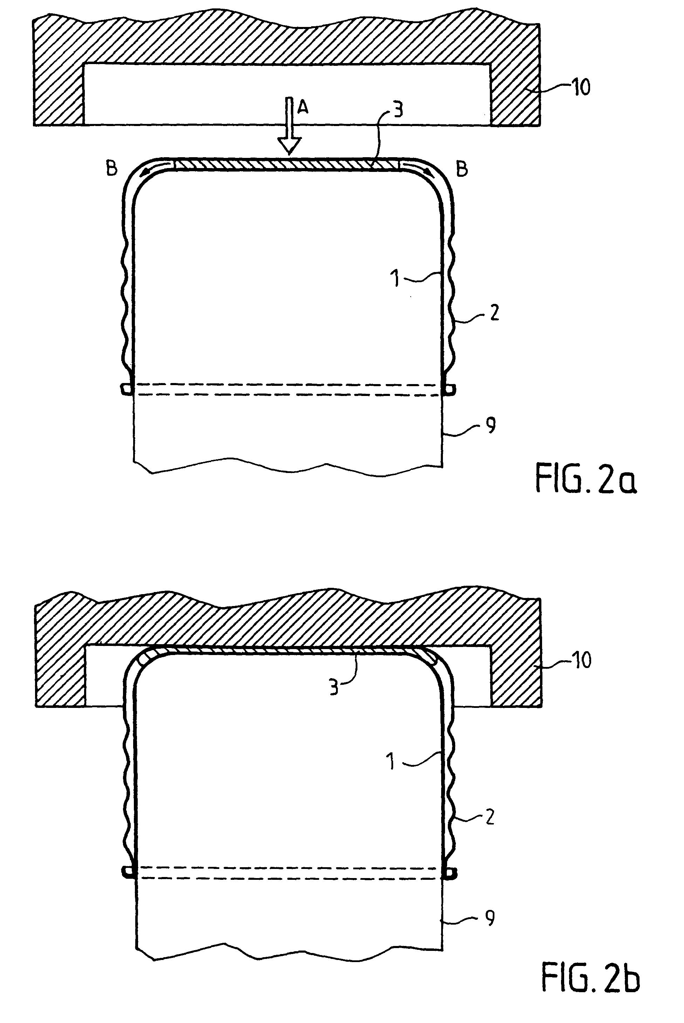

En outre, l'élément intermédiaire subit un fluage: les rebords remontent en partie entre les deux parois comme l'indiquent les flèches B à la figure 2a. La figure 2b illustre le résultat final obtenu après la frappe.

Dans le cas où des orifices 8 sont prévues à la base de la contre-cuve 2, la frappe provoque un fluage du matériau de l'élément 3 vers lesdits orifices, tel qu'illustré à la figure 1.

Une fois la frappe à chaud réalisée, les rebords supérieurs du récipient sont avantageusement fixés entre eux, tel que décrit précédemment.

Contrairement à ce que l'on aurait pu prévoir, les doubles parois du récipient ayant subi une frappe à chaud ne sont pas écrasées ou repoussées l'une contre l'autre.

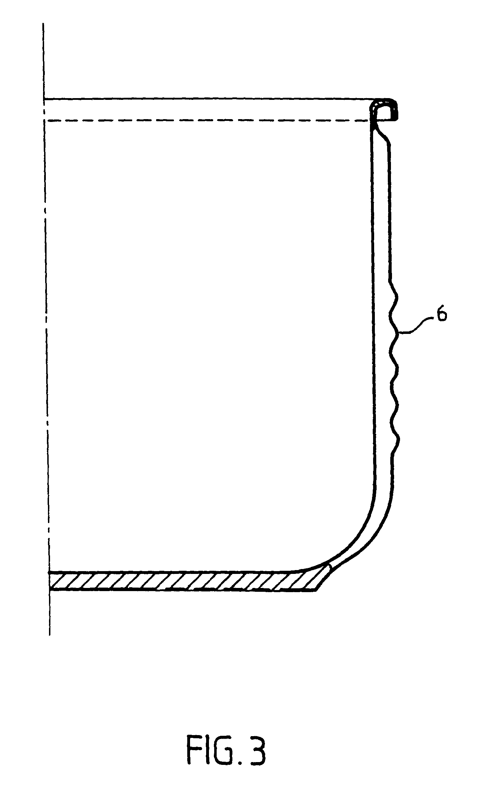

La variante illustrée à la figure 3 ne diffère de celles montrées aux figures 1 et 2 que par une conformation particulière de la contre-cuve qui comporte un motif 6 particulier. On voit ainsi qu'il est possible de réaliser une multitude de versions différentes simplement en prévoyant un profil particulier pour chaque série de contre-cuves.

### POSSIBILITES D'APPLICATION INDUSTRIELLE

L'invention trouve son application dans le domaine technique des récipients de cuisson à double paroi en général et elle s'applique plus particulièrement aux autocuiseurs comportant une telle configuration à double paroi.

## Revendications

1. Procédé d'assemblage d'un récipient de cuisson à double paroi comportant une cuve (1) interne, un élément intermédiaire de fond (3) et une contre cuve (2) formant un espace inter parois (5) avec la cuve (1), caractérisé en ce qu'il consiste à disposer sur un poinçon (9) la cuve (1), l'élément intermédiaire de fond (3) et la contre cuve (2), la cuve (1) et la contre cuve (2) étant préformées de manière à former l'espace inter parois (5), l'élément intermédiaire de fond (3) étant réalisé dans un métal susceptible de fluer à chaud, et à réaliser une frappe à chaud au moyen d'une matrice (10).

2. Procédé selon la revendication 1, dans lequel l'ensemble (2, 3, 1) à frapper est préchauffé à une température définie.

3. Procédé selon l'une des revendications précédentes, dans lequel la frappe occasionne une déformation permanente de la portion correspondant sensiblement au fond du récipient.

4. Procédé selon l'une des revendications précédentes, dans lequel la frappe à chaud est réalisée à une température favorisant le fluage du matériau constituant l'élément intermédiaire (3).

5. Procédé selon la revendication 4, dans lequel ladite température se situe entre 400°C et 500°C.

6. Procédé selon la revendication 1, dans lequel la frappe à chaud est réalisée au moyen d'un poinçon (9) et d'une matrice (10) adaptés au profil final prévu.

7. Procédé selon l'une des revendications précédentes, dans lequel au moins deux des éléments (2, 3, 1) constituant ledit ensemble sont prépositionnés ou préassemblés avant la frappe à chaud par soudure ou collage.

8. Récipient de cuisson à double paroi comportant une cuve (1), une contre cuve (2) formant un espace inter parois (5) avec la cuve (1), et un élément intermédiaire de fond (3) assemblé avec la face extérieure du fond de la cuve (1) et avec la face intérieure du fond de la contre cuve (2), caractérisé en ce que l'élément intermédiaire de fond (3) est réalisé dans un métal déformé à chaud par fluage.

9. Récipient selon la revendication 8, dans lequel ledit espace (5) contient de l'air.

10. Récipient selon la revendication 8, dans lequel ledit espace (5) contient un matériau isolant.

11. Récipient selon l'une des revendications 8 à 10, consistant en un autocuiseur.

## Claims

1. A method of assembling a double-walled cooking vessel comprising an inner bowl (1), an intermediate bottom element (3) and an outer bowl (2) co-operating with the inner bowl (1) to leave an inter-wall space (5), the method being characterized in that it consists in placing the inner bowl (1), the intermediate bottom element (3), and the outer bowl (2) on a punch (9), the inner bowl (1) and the outer bowl (2) being preshaped so as to form the inter-wall space (5), the bottom element (3) being made of a metal that is subject to creep when hot, and in hot stamping by means of a die (10).

2. A method according to claim 1, in which the assembly (2, 3, 1) to be stamped is preheated to a defined temperature.

3. A method according to either preceding claim, in which the stamping gives rise to permanent deformation of the portion that corresponds substantially to the bottom of the vessel.

4. A method according to any preceding claim, in which the hot stamping is implemented at a temperature that encourages the material constituting the intermediate element (3) to creep.

5. A method according to claim 4, in which said temperature is situated in the range 400°C to 500°C.

6. A method according to claim 1, in which the hot stamping is implemented by means of a punch (9) and a die (10) adapted to the intended final profile.

7. A method according to any preceding claim, in which at least two of the elements (2, 3, 1) constituting said assembly are prepositioned or preassembled prior to the hot stamping by welding or adhesive.

8. A double-walled cooking vessel comprising an inner bowl (1), an outer bowl (2) co-operating with the inner bowl (1) to form an inter-wall space (5), and an intermediate bottom element (5) assembled against the outside face of the bottom of the inner bowl (1) and against the inside face of the bottom of the outer bowl (2), the vessel being characterized in that the intermediate bottom element (3) is made of a metal that deforms when hot by creeping.

9. A vessel according to claim 8, in which said space (5) contains air.

10. A vessel according to claim 8, in which said space (5) contains an insulating material.

11. A vessel according to any one of claims 8 to 10, constituting a pressure cooker.

## Patentansprüche

1. Verfahren zum Zusammenfügen eines doppelwandigen Kochgefäßes mit einer inneren Wanne (1), einem Zwischenbodenteil (3) und einer Gegenwanne (2), die mit der Wanne (1) einen Wandzwischenraum (5) bildet, dadurch gekennzeichnet, daß es darin besteht, die Wanne (1), das Zwischenbodenteil (3) und die Gegenwanne (2) auf einen Stempel (9) anzuordnen, wobei die Wanne (1) und die Gegenwanne (2) so vorgeformt sind, daß der Wandzwischenraum (5) gebildet wird, und wobei das Zwischenbodenteil (3) aus einem warmfließbaren Metall besteht, sowie darin, mit Hilfe einer Matrize (10) einen Warmschlagvorgang durchzuführen.

2. Verfahren nach Anspruch 1, bei dem die zu schlagende Baugruppe (2, 3, 1) auf eine bestimmte Temperatur vorgewärmt wird.

3. Verfahren nach einem der vorstehenden Ansprüche, bei dem das Schlagen eine dauerhafte Verformung des im wesentlichen dem Gefäßboden entsprechenden Abschnitts verursacht.

4. Verfahren nach einem der vorstehenden Ansprüche, bei dem das Warmschlagen bei einer Temperatur durchgeführt wird, die das Fließen des Materials begünstigt, aus dem das Zwischenteil (3) besteht.

5. Verfahren nach Anspruch 4, bei dem die Temperatur zwischen 400°C und 500°C liegt.

6. Verfahren nach Anspruch 1, bei dem das Warmschlagen mittels eines Stempels (9) und einer Matrize (10) erfolgt, die an das vorgesehene Endprofil angepaßt sind.

7. Verfahren nach einem der vorstehenden Ansprüche, bei dem wenigstens zwei der die Baugruppe bildenden Elemente (2, 3, 1) vor dem Warmschlagen durch Löten oder Kleben vorpositioniert oder vormontiert sind.

8. Doppelwandiges Kochgefäß mit einer Wanne (1), einer Gegenwanne (2), die mit der Wanne (1) einen Wandzwischenraum (5) bildet, und einem Zwischenbodenteil (3), das mit der Außenseite des Bodens der Wanne (1) und mit der Innenseite des Bodens der Gegenwanne (2) zusammengefügt ist, dadurch gekennzeichnet, daß das Zwischenbodenteil (3) aus einem durch Fließen warmverformten Metall besteht.

9. Gefäß nach Anspruch 8, bei dem der Zwischenraum (5) Luft enthält.

10. Gefäß nach Anspruch 8, bei dem der Zwischenraum (5) ein isolierendes Material enthält.

11. Gefäß nach einem der Ansprüche 8, das ein Dampfkochtopf ist.
